# EUROPEAN PATENT APPLICATION

(11) **EP 4 815 545 A1**
(43) Date of publication of application: **30.09.2026**
(21) Application number: 23959171.2
(22) Date of filing: 22.11.2023
(51) Int. Cl.: H04W 24/08, H04W 24/02

(54) **INFORMATION TRANSMISSION METHOD, APPARATUS AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); FU, Zhe, Dongguan, Guangdong 523860 (CN); LIU, Yang, Dongguan, Guangdong 523860 (CN)
(74) Representative: Novagraaf Technologies
(86) International application number: PCT/CN2023/133382
(87) International publication number: WO 2025/107197

(57) **Abstract**

An information transmission method, apparatus and device, and a storage medium, which relate to the technical field of communications. The method is executed by a first device, and the method comprises: on the basis of configuration information, using a user plane protocol stack to send sensing signaling, wherein the configuration information is used for configuring a first condition, the first condition is a condition for the first device to transmit sensing signaling by using a user plane protocol stack, and the sensing signaling is used for transmitting sensing data (1310). By means of the method, the first device determines to use the user plane protocol stack to transmit the sensing signaling on the basis of the configuration information, thereby avoiding congestion of control plane protocol stack transmission due to the fact that the volume of data carried in the sensing signaling is too large, so as to improve the data transmission efficiency and improve the stability of a communication system.

## Description

### TECHNICAL FIELD

The embodiments of the present disclosure relate to the technical field of communication technology, and particularly to a method and apparatus for transmitting information, and a device and a storage medium.

### RELATED ART

With the development of technology, the sensing capabilities of communication devices are becoming stronger and stronger, and the integration of sensing and communication technology is also finding more and more applications in daily life. However, further discussion and research are needed on how to transmit sensing signaling between sensing devices.

### SUMMARY

The embodiments of the present disclosure provide a method and apparatus for transmitting information, and a device and a storage medium. The technical solutions are as follows.

According to one aspect of the embodiments of the present disclosure, a method for transmitting information is provided, which is performed by a first device and includes:
transmitting, based on configuration information, sensing signaling using a user plane protocol stack, wherein the configuration information is used to configure a first condition, wherein the first condition is a condition for the first device to transmit the sensing signaling using the user plane protocol stack, and the sensing signaling is used to transmit sensing data.

According to one aspect of the embodiments of the present disclosure, a method for transmitting information is provided, which is performed by a second device and includes:
transmitting configuration information, wherein the configuration information is used to configure a first condition, wherein the first condition is a condition for a first device to transmit sensing signaling using a user plane protocol stack, wherein the sensing signaling is used to transmit sensing data.

According to one aspect of the embodiments of the present disclosure, an apparatus for transmitting information is provided, which includes:
a transmitting module, configured to transmit, based on configuration information, sensing signaling using a user plane protocol stack, wherein the configuration information is used to configure a first condition, wherein the first condition is a condition for a first device to transmit the sensing signaling using the user plane protocol stack, and the sensing signaling is used to transmit sensing data.

According to one aspect of the embodiments of the present disclosure, an apparatus for transmitting information is provided, which includes:
a transmitting module, configured to transmit configuration information, wherein the configuration information is used to configure a first condition, wherein the first condition is a condition for a first device to transmit sensing signaling using a user plane protocol stack, wherein the sensing signaling is used to transmit sensing data.

According to one aspect of the embodiments of the present disclosure, a communication device is provided, which includes a processor and a memory. The memory stores a computer program, and the processor executes the computer program to perform the aforementioned method for transmitting information. The communication device is a first device, or alternatively, the communication device is a second device.

According to one aspect of the embodiments of the present disclosure, a computer-readable storage medium is provided, in which a computer program is stored. The computer program is configured to be executed by a processor to perform the aforementioned method for transmitting information.

According to one aspect of the embodiments of the present disclosure, a chip is provided, which includes a programmable logic circuit and/or program instructions, and is used to perform the aforementioned method for transmitting information when the chip is operated.

According to one aspect of the embodiments of the present disclosure, a computer program product is provided, which includes computer instructions stored in a computer-readable storage medium. The processor reads and executes the computer instructions from the computer-readable storage medium to perform the aforementioned method for transmitting information.

The technical solutions according to the embodiments of the present disclosure may achieve the following beneficial effects:
Based on the configuration information, the first device determines to use the user plane protocol stack to transmit sensing signaling, avoiding congestion in the control plane protocol stack transmission caused by an excessive amount of data carried in the sensing signaling, thereby improving data transmission efficiency and enhancing the stability of the communication system.

### BRIEF DESCRIPTION OF DRAWINGS

FIG. 1 is a schematic diagram of a network architecture according to an embodiment of the present disclosure;
FIG. 2 is a schematic diagram of the 5G (5th Generation Mobile Communication Technology) system architecture according to an embodiment of the present disclosure;
FIG. 3 is a schematic diagram of device-free/device-based sensing according to an embodiment of the present disclosure;
FIG. 4 is a schematic diagram of a wireless sensing mode according to an embodiment of the present disclosure;
FIG. 5 is a flowchart of application function (AF)-triggered sensing according to an embodiment of the present disclosure;
FIG. 6 is a flowchart of User Equipment (UE)-triggered sensing according to an embodiment of the present disclosure;
FIG. 7 is a flowchart of a UE-2-UE sensing mode controlled by a sensing function (SF, sensing function network element) according to an embodiment of the present disclosure;
FIG. 8 is a schematic diagram of a coverage scenario of a terminal device according to an embodiment of the present disclosure;
FIG. 9 is a flowchart of a UE-autonomous sensing service according to an embodiment of the present disclosure;
FIG. 10 is a flowchart of a terminal-autonomous UE-2-UE sensing air interface according to an embodiment of the present disclosure;
FIG. 11 is a schematic diagram of a UE-SF/sensing control plane function and control plane protocol stack according to an embodiment of the present disclosure;
FIG. 12 is a schematic diagram of a UE-SF/sensing data plane function and data plane protocol stack according to an embodiment of the present disclosure;
FIG. 13 is a flowchart of a method for transmitting information according to an embodiment of the present disclosure;
FIG. 14 is a flowchart of a method for transmitting information according to another embodiment of the present disclosure;
FIG. 15 is a block diagram of an apparatus for transmitting information according to an embodiment of the present disclosure;
FIG. 16 is a block diagram of an apparatus for transmitting information according to another embodiment of the present disclosure;
FIG. 17 is a structural schematic diagram of a first device according to an embodiment of the present disclosure; and
FIG. 18 is a structural schematic diagram of a second device according to an embodiment of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

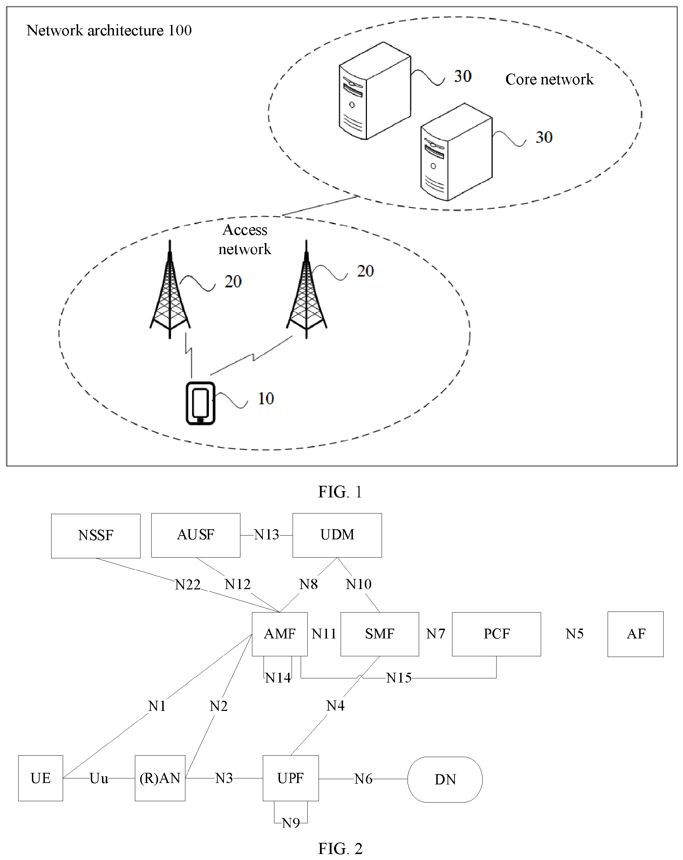

Please refer to FIG. 1, which illustrates a schematic diagram of a network architecture 100 according to an embodiment of the present disclosure. The network architecture 100 may include: a terminal device 10, an access network device 20, and a core network element 30.

The terminal device 10 can refer to UE, station (STA), access terminal, user unit, user station, mobile station, mobile, remote station, remote terminal, mobile device, wireless communication device, user agent, or user apparatus. In some embodiments, the terminal device 10 can also be a cellular phone, cordless phone, Session Initiation Protocol (SIP) phone, wireless local loop (WLL) station, personal digital assistant (PDA), handheld device with wireless communication function, computing device, or other processing device connected to a wireless modem, in-vehicle device, wearable device, terminal device in 5G (5th Generation System), or terminal device in the future-evolved public land mobile network (PLMN). The embodiments of the present disclosure are not limited to these. For ease of description, the aforementioned devices are collectively referred to as terminal devices. Typically, there are a plurality of terminal devices 10, and one or more terminal devices 10 can be distributed within the cell managed by each access network device 20. The terminal device can also be referred to simply as a terminal or UE, and those skilled in the art can understand its meaning.

The access network device 20 is a device deployed in the access network to provide wireless communication functions for the terminal device 10. The access network device 20 can include various forms of macro base stations, micro base stations, relay stations, Aps, and so on. In systems adopting different radio access technologies, the names of devices with access network device functions may vary. For example, in a 5G NR system, it is referred to as gNodeB or gNB. As communication technology evolves, the name "access network device" may change. For ease of description, in the embodiments of the present disclosure, the devices providing wireless communication functions for the terminal device 10 are collectively referred to as access network devices. In some embodiments, a communication relationship can be established between the terminal device 10 and the core network element 30 through the access network device 20. Illustratively, in a long-term evolution (LTE) system, the access network device 20 can be an evolved universal terrestrial radio access network (EUTRAN) or one or more eNodeBs in the EUTRAN; in a 5G NR system, the access network device 20 can be a radio access network (RAN) or one or more gNBs in the RAN. In the embodiments of the present disclosure, unless otherwise specified, the "network device" refers to the access network device 20, such as a base station.

The core network element 30 is a network element deployed in the core network. The main functions of the core network element 30 are to provide user connections, manage users, and bear services. It serves as an interface for the bearer network to connect to external networks. For example, the core network elements in the 5G NR system can include access and mobility management function (AMF) entity, user plane function (UPF) entity, session management function (SMF) entity, and other network elements.

In some embodiments, the access network device 20 and the core network element 30 communicate with each other via an air interface technology, such as the NG interface in the 5G NR system. The access network device 20 and the terminal device 10 communicate with each other via an air interface technology, such as the Uu interface.

In the embodiments of the present disclosure, the "5G NR system" can also be referred to as the 5G system or the NR system, but those skilled in the art can understand its meaning. The technical solutions described in the embodiments of the present disclosure can be applied to LTE systems, as well as to 5G NR systems, and to subsequent evolution systems of 5G NR systems (such as B5G (Beyound 5G) systems, 6G systems (6th Generation System), and other communication systems such as narrow band Internet of things (NB-IoT) systems, which are not limited by the present disclosure.

In the embodiments of the present disclosure, a network device can provide services for a cell, and a terminal device communicates with the network device through transmission resources (such as frequency domain resources, or spectrum resources) on the carrier used by the cell. The cell can be the one corresponding to the network device (such as a base station), and the cell can belong to a macro base station or a base station corresponding to a small cell. Here, the small cell can include: Metro cell, Micro cell, Pico cell, Femto cell, etc. These small cells are characterized by small coverage areas and low transmission power, and are suitable for providing high-rate data transmission services.

Before introducing the technical solutions of the present disclosure, some relevant technical knowledge involved in the present disclosure will be introduced and explained first. The following relevant technologies can be arbitrarily combined with the technical solutions of the embodiments of the present disclosure as optional solutions, and all of them fall within the protection scope of the embodiments of the present disclosure. The embodiments of the present disclosure include at least some of the following contents.

The architecture diagram of the 5G network system is illustrated in FIG. 2. In this diagram, the UE establishes an access stratum connection with the AN through the Uu interface, exchanging access stratum messages and wireless data transmission. The UE also establishes a non-access stratum (NAS) connection with the AMF through the N1 interface, exchanging NAS messages. The AMF serves as the mobility management function in the core network, while the SMF is responsible for session management. In addition to managing the mobility of the UE, the AMF is also tasked with forwarding session management-related messages between the UE and the SMF. The policy control function (PCF) is the policy management function in the core network, responsible for formulating policies related to the UE's mobility management, session management, billing, and other related aspects. The user plane function (UPF) is the user plane function in the core network, facilitating data transmission with external data networks through the N6 interface and with the access network (AN) through the N3 interface.

### 1. Definition of wireless sensing

In the integration of communication and sensing, the sensing capability focuses on wireless signal sensing, which involves analyzing direct, reflected, and scattered signals of radio waves to acquire information about the environment and/or target objects within the environment (such as properties and states). This enables functions such as positioning, ranging, speed measurement, imaging, detection, recognition, and environmental reconstruction, facilitating the sensing and exploration of the physical world.

Passive sensing: Sensing nodes (on the network or at the terminal) perform sensing through acquiring electromagnetic waves (such as terahertz waves) emitted by target objects or reflecting electromagnetic waves from outside the sensing nodes and target objects, such as passive imaging-based sensing technology in radio astronomy in China.

Active sensing: The sensing transmitting node (network or terminal) transmits electromagnetic waves, which, after being reflected by the target object, are received by the sensing receiving node for sensing. For example, active radar-based sensing technology that emits detection signals. Wherein, the node receiving the reflected wave is not necessarily the node that transmitted the detection signal, that is, a plurality of nodes of the sensing party can achieve active sensing through some form of joint processing.

Per-Area/Object Sensing: 5G-A integrated sensing and communication scenarios can be categorized into Per-Area integrated sensing and communication scenario and Per-Object integrated sensing and communication scenario based on whether the primary focus is on a designated sensing area or a designated sensing target in terms of sensing requirements. Sensing requirements are prevalent across various industries. For scenarios that require efficient sensing of real-time states of roads, vehicles, and people in factories, roads, low-altitude areas, cities, and even larger spatial and temporal scales, we refer to them as Per-Area integrated sensing and communication scenarios. For scenarios that utilize integrated sensing and communication technology to continuously sense and track the sensed object to acquire dynamic monitoring of its state, we refer to them as Per-Object integrated sensing and communication scenarios.

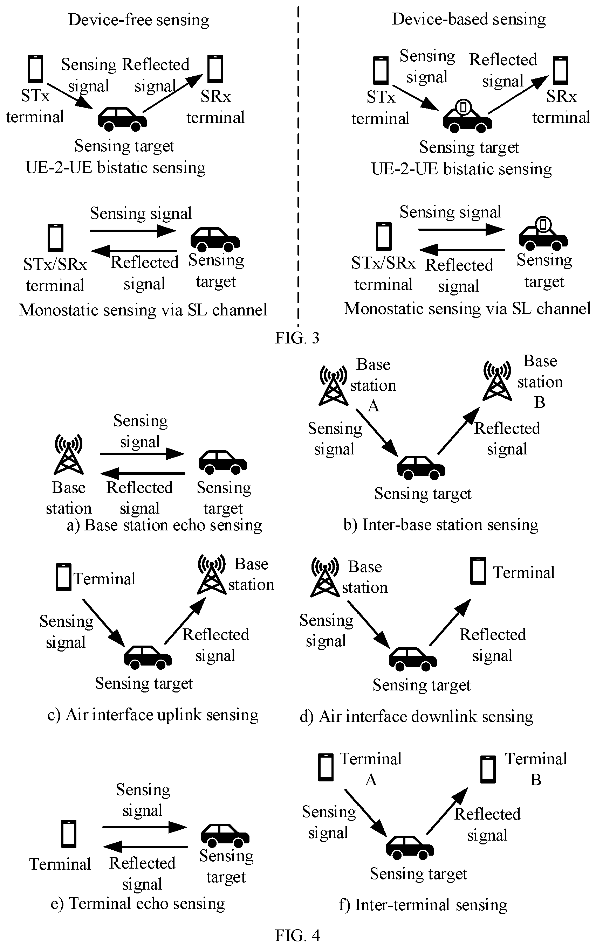

Device-based/free sensing: As illustrated in FIG. 3, based on whether the sensing target possesses signal transmission or reception capabilities, it can be categorized into device-based integrated sensing and communication scenarios and device-free integrated sensing and communication scenarios. For example, in flight path management, base station and terminal beam management, the sensing targets, drones and terminals, are user devices with signal transmission or reception capabilities, belonging to device-based integrated sensing and communication scenarios. In weather monitoring and respiratory monitoring, the sensing targets, rainfall and humans, do not possess signal transmission or reception capabilities, belonging to device-free integrated sensing and communication scenarios.

### 2. Sensing scenarios and use cases

In the intelligent transportation scenario, sensing of the road environment is achieved based on integrated sensing and communication base stations or base station-to-base station collaboration, effectively enabling the construction of high-precision maps and providing beyond-line-of-sight assistance for the safe operation of autonomous vehicles. Comprehensive, all-weather, and uninterrupted detection of the moving trajectory and speed of traveling vehicles is achieved based on integrated sensing and communication base stations or base station-to-base station collaboration, and the sensing information is uploaded to the processing center, comprehensively enhancing the intelligent sensing capability of highway operation status and providing data support for road supervision. Sensing of the railway track environment is achieved based on integrated sensing and communication base stations, enabling all-weather detection of foreign object intrusion around high-speed railways.

In the intelligent low-altitude scenario, based on the integrated sensing and communication base stations or base station-to-base station collaboration, the airspace is comprehensively and multi-angle sensed, and the sensing results are provided to drones, which can provide redundancy for obstacle avoidance warning and improve the success rate of drone obstacle avoidance. Based on the integrated sensing and communication base stations or base station-to-base station collaboration, full-airspace sensing is conducted to locate and track drones that intrude into the supervised area, thereby achieving drone intrusion monitoring for fixed areas.

In the smart living scenario, based on the working mode of base station and terminal collaboration, or terminal self-transmitting and self-receiving, or terminal-to-terminal collaboration, breathing monitoring, fitness monitoring, gesture/posture recognition, etc. are carried out by sensing wireless channel changes. Based on the integrated sensing and communication base station or base station-to-base station collaboration, the signal link attenuation in the communication link is measured, and then the corresponding weather indicators are acquired through analyzing the relationship between signal link attenuation and weather indicators, thus achieving weather monitoring.

In the intelligent network scenario, based on the integrated sensing and communication base stations or base station-to-base station collaboration, information such as the density and location of idle terminals within the cell is acquired, which assists in energy saving and resource scheduling optimization for base stations within the cell.

In the intelligent transportation scenario, continuous tracking of vehicles is achieved based on integrated sensing and communication base stations or base station-to-base station collaboration, enabling real-time dynamic monitoring of vehicle status. For vehicles equipped with wireless communication capabilities, the sensing accuracy can be further improved through collaborative sensing among vehicles.

In the intelligent low-altitude scenario, based on the integrated sensing and communication base station or base station-to-base station collaboration, drones that intrude into the supervised area are located and tracked, and then actions are taken to drive away the "unmanned aerial vehicles that fly without permission". For networked drones with wireless communication capabilities, drone collaborative sensing can also be used to identify the flight status of the drone, obstacles in the flight path, etc., providing auxiliary flight services.

In the smart living scenario, by carrying a terminal with communication capabilities, based on the working mode of base station and terminal collaboration, or terminal self-transmitting and self-receiving, or terminal-to-terminal collaboration, specific human body can be monitored for breathing, fitness, gesture/posture recognition, etc., to achieve accurate real-time dynamic monitoring.

In the intelligent network scenario, based on integrated sensing and communication technology, it aids in enhancing beam management and channel estimation accuracy, improving the timeliness of terminal beam tracking, and enhancing channel estimation accuracy to reduce feedback overhead.

### 3. 3GPP (3rd generation partnership project) sensing

The current cellular networks, including 5G networks, are only utilized for communication. However, the wireless electromagnetic wave signals employed by cellular networks can not only be used for wireless data transmission and communication purposes, but also possess environmental sensing capabilities, such as recognizing user actions or gestures, monitoring breathing, measuring terminal movement speed, imaging the environment, and monitoring weather. Therefore, in the future, cellular networks can be considered not only for communication and data transmission but also for acquiring sensing information. Table 1 enumerates some different levels of sensing information.

**Table 1: Sensing information at different levels**

| | Sensing information at different levels | The content of sensing information |
|---|---|---|
| 1 | Received signal or original channel information | The complex result of the received signal or channel response, amplitude/phase, I-channel/Q-channel, and their related operational results |
| 2 | Basic measurement quantity | Time delay, Doppler frequency shift, angle, signal strength, and their multi-dimensional combinations |
| 3 | Basic attributes or state of the sensing target | Distance, speed, direction, acceleration, etc. |
| 4 | Advanced attributes or status of the sensing target | Whether the target exists, its spatial location, trajectory, action, expression, vital signs, quantity, imaging results, weather, air quality, shape, material, composition, etc. |

Currently, discussions are underway to support sensing capabilities in B5G networks by adding a sensing function and corresponding processes to enable sensing functionality in 3GPP networks. When an application transmits a sensing request for a sensing target to the core network of the 3GPP network, the core network selects the correct access network device or auxiliary UE (collectively referred to as sensing nodes) through the sensing function or AMF, triggers the capability for sensing-related wireless measurements, initiates the measurement of sensing information and generates sensing results.

As illustrated in FIG. 4, the main wireless sensing modes of integrated sensing and communication are as follows:
a) Base station echo sensing (gNB self-transmitting and self-receiving sensing): The base station transmits sensing signals and receives echo signals;
b) Inter-base station sensing (gNB-2-gNB sensing): Base station B receives the sensing signal transmitted by base station A;
c) Air interface uplink sensing (UE-2-gNB sensing): The base station receives the sensing signal transmitted by the terminal;
d) Air interface downlink sensing (gNB-2-UE sensing): The terminal receives the sensing signal transmitted by the base station;
e) Terminal echo sensing (UE self-transmitting and self-receiving sensing): The terminal transmits sensing signals and receives echo signals;
f) Inter-terminal sensing (UE-2-UE sensing): Terminal B receives the sensing signal transmitted by Terminal A.

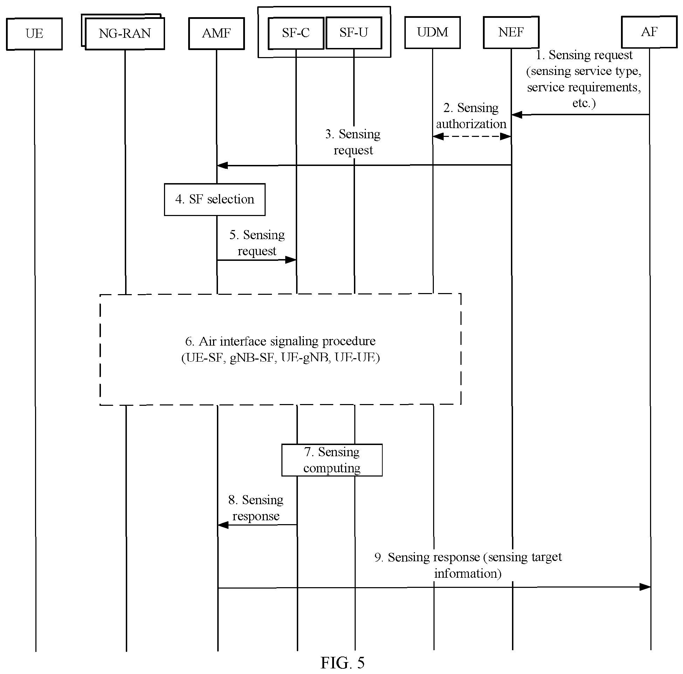

As illustrated in FIG. 5, it is a flowchart of a possible process for controlling an access network device or UE to perform sensing operations. The sensing request described in process 1 is triggered by AF, hence it is referred to as an AF-triggered sensing process, and the sensing request belongs to a mobile terminated-sensing request (MT-SR). In addition to MT-SR, the sensing request also includes a mobile originated-sensing request (MO-SR) as described in FIG. 4, as well as a possible network induced-sensing request (NI-SR) triggered by network internal elements.

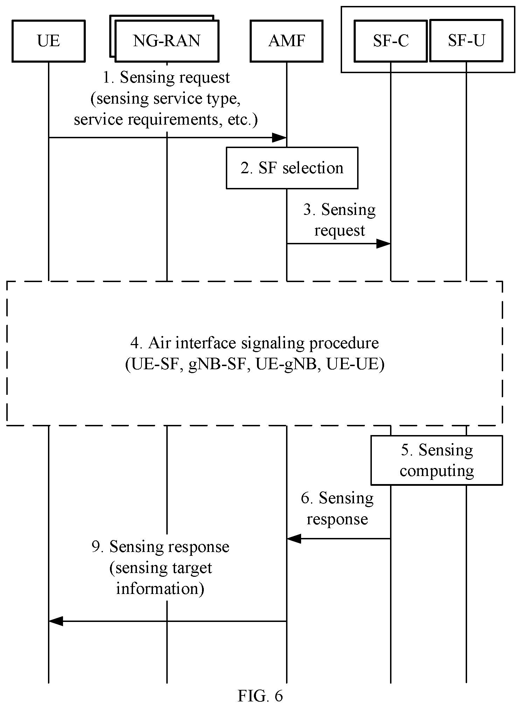

Process 6 in FIG. 5 and process 4 in FIG. 6 are air interface sensing signaling processes. The air interface sensing signaling process can be categorized into: SF and gNB signaling interaction, SF and UE signaling interaction, gNB and UE signaling interaction, and UE and UE signaling interaction, depending on the different interacting network elements. Since different sensing modes involve different types of sensing nodes (UE/gNB), the air interface signaling processes required for different sensing modes are also different, as illustrated in Table 2.

**Table 2: Air interface signaling processes corresponding to different sensing modes**

| | gNB sensing | | UE-gNB sensing | | UE sensing | |
|---|---|---|---|---|---|---|
| sensing mode | gNB self-transmitting and self-receiving | gNB-2-gNB | UE-2-gNB | gNB-2-UE | UE self-transmitting and self-receiving | UE-2-UE |
| SF-gNB | √ | √ | √ | √ | √ | √ |
| SF-UE | × | × | √ | √ | √ | √ |
| gNB-UE | × | × | √ | √ | √ | √ |
| UE-UE | × | × | × | × | √ | √ |

In the sensing mode, the sensing modes involving terminal devices include UE-2-gNB, gNB-2-UE, as well as UE self-transmitting and self-receiving, and UE-2-UE. For the two sensing modes of UE-2-gNB and gNB-2-UE, the gNB is required to participate as the transmitter or receiver of the sensing reference signal, and naturally, it should be controlled by the network. The SF or other core network elements should participate in the sensing process as the control node. For the UE-2-UE sensing or UE self-transmitting and self-receiving sensing, in the in coverage (IC) scenario, the SF and other core network elements can also participate in the sensing process as the control node.

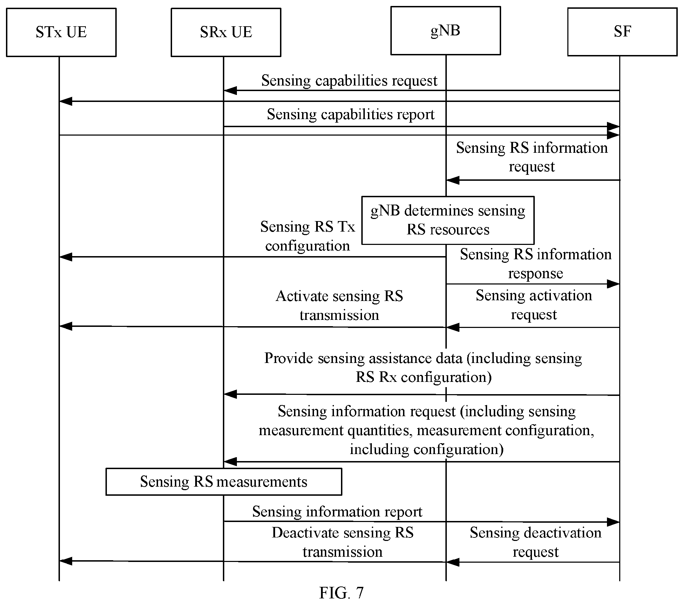

FIG. 7 illustrates the air interface sensing signaling process for a UE-2-UE sensing mode controlled by SF. For other sensing modes involving terminal devices, the air interface sensing signaling process is similar, and only appropriate modifications are needed based on this. For example, for UE self-transmitting and self-receiving sensing, the sensing transmitting UE (STx UE) and sensing receiving UE (SRx UE) are the same terminal; for the UE-2-gNB sensing mode, gNB replaces SRx UE; for the gNB-2-UE sensing mode, gNB replaces STx UE.

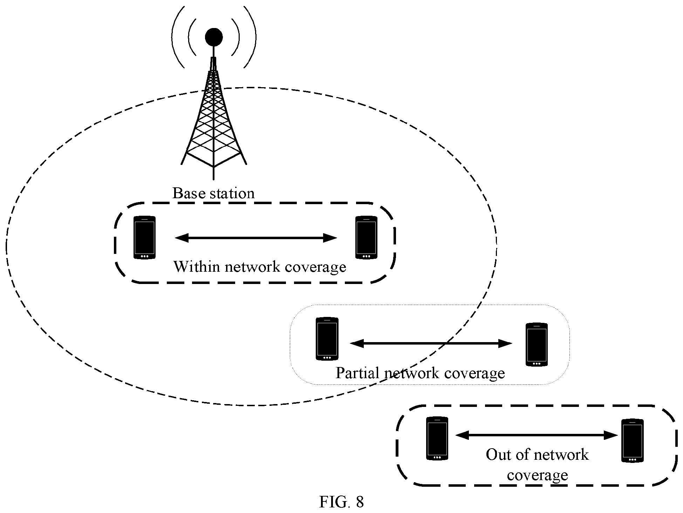

In addition, as illustrated in FIG. 8, for terminal sensing modes (i.e., UE-2-UE sensing, UE self-transmitting and self-receiving sensing), the sensing process also needs to consider scenarios without network coverage (out of coverage, OOC).

For OOC scenarios, similar to R18 Sidelink positioning, due to the inability of terminal devices to acquire network coverage, core network elements such as SF cannot participate in the terminal sensing process, and the sensing process described in FIG. 5 is not applicable. In this case, it is necessary to select some terminal devices with strong capabilities, and these terminals should partially assume some tasks of SF in OOC scenarios. Therefore, in addition to the two types of sensing execution terminals: sensing transmitting terminals and sensing receiving terminals, it is also necessary to define the terminal role of sensing service terminals/sensing management terminals (sensing server/management UE).

Therefore, terminal sensing needs to consider the following different terminal roles:
- Sensing transmitting terminal: In terminal sensing, it is responsible for transmitting sensing reference signals.
- Sensing receiving terminal: In terminal sensing, it is responsible for receiving and measuring the sensing reference signal, and acquiring the sensing measurement quantity.
- Sensing service terminal/sensing management terminal (sensing server UE, SS UE): In terminal sensing, under the OOC scenario, it is a logical node that undertakes some SF functions, such as sensing measurement processing. It may be one of the sensing transmitting terminal or sensing receiving terminal, or it may be independent.

Specifically, for UE self-transmitting and self-receiving sensing, the sensing transmitting terminal and the sensing receiving terminal are the same terminal.

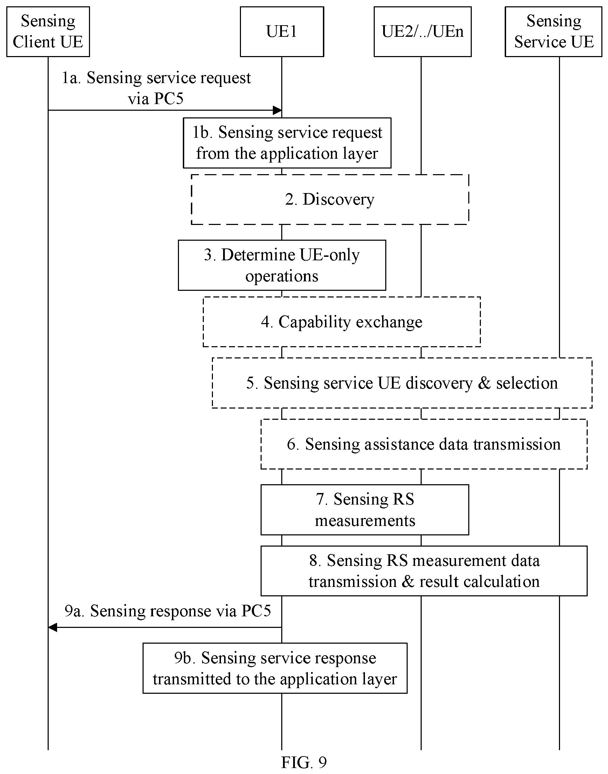

FIG. 9 is a flowchart of a complete UE-autonomous sensing business process only involving UEs, primarily tailored for OOC scenarios or situations where the current network lacks support for sensing business.

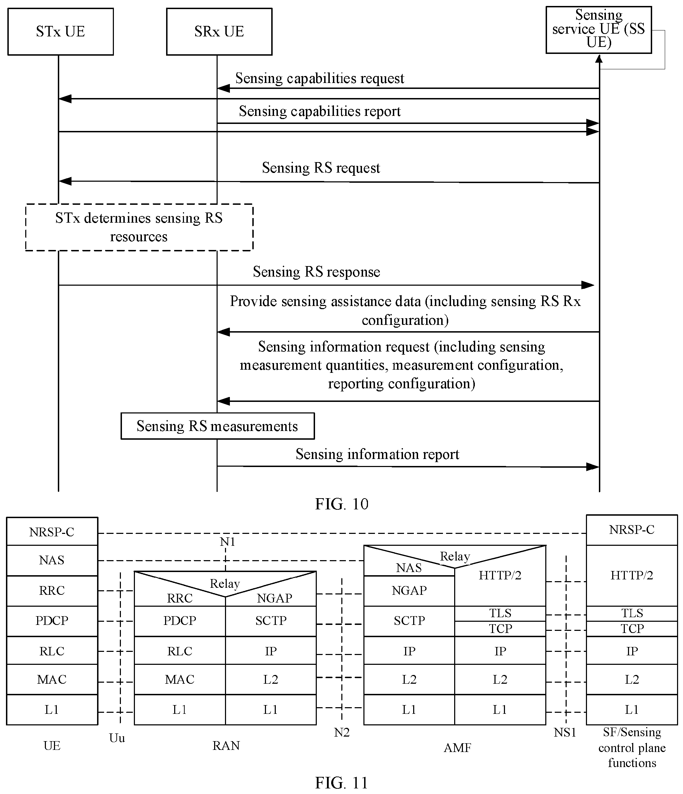

Wherein, processes 4-8 constitute the air interface sensing signaling process. Regarding the air interface process of processes 4-8, FIG. 10 further presents a terminal-autonomous UE-2-UE sensing air interface flowchart, primarily targeting the OOC scenario.

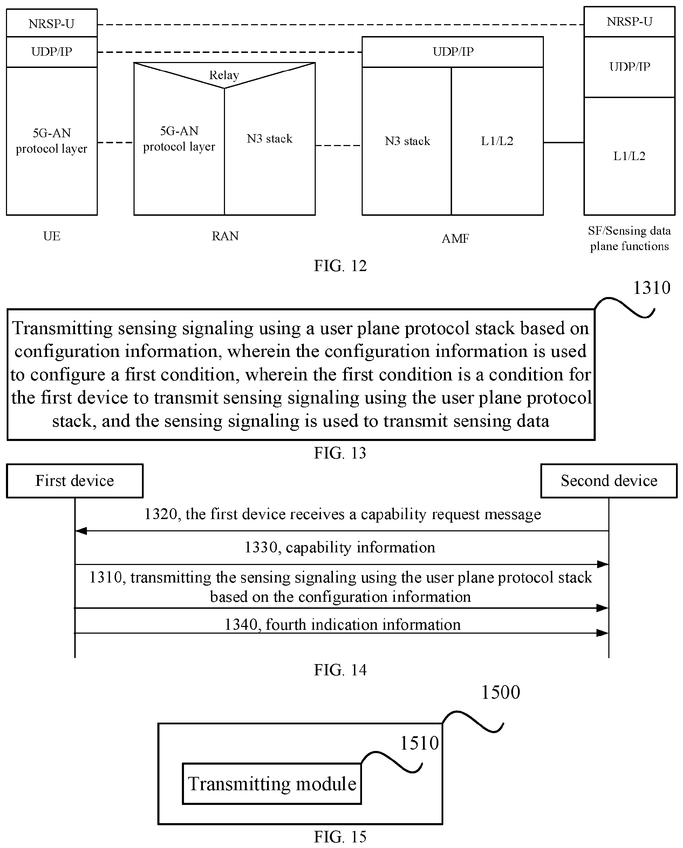

As illustrated in FIG. 11, a control plane protocol stack is provided for the transmission of sensing signaling between UE and SF. As illustrated in FIG. 12, a user plane protocol stack is provided for the transmission of sensing signaling between UE and SF.

The control plane primarily transmits control plane signaling, typically involving small amounts of data, and can usually ensure transmission with the highest priority, with reliability/availability being guaranteed. The user plane is mainly used for transmitting user data, making it suitable for large data volume transmission. However, its transmission priority is constrained by transmission resources and data quality of service (QoS), which may lead to congestion and longer transmission delays.

In the existing positioning system, the LTE Positioning Protocol (LPP) protocol is used point-to-point between the LMF and the target UE, aiming to locate the target UE using locationrelated measurement quantities acquired from one or more reference sources. The signaling exchanged between the UE and the LMF through the LPP protocol includes capability information, positioning assistance information, location information requests, and reports, etc. These messages typically have relatively small data volumes and are generally regarded as control plane signaling from the perspective of message types.

Therefore, the LPP protocol is typically transmitted between LMF and UE through the control plane protocol stack, i.e., the control-plane location solution; however, the LPP protocol also supports transmission through the user plane protocol stack, i.e., the user-plane location solution. Furthermore, in existing positioning, it supports the conversion between UP solution and CP solution based on LMF requests or AMF signaling congestion. For example, if LMF decides to use UP, LMF should instruct the UE to use UP for positioning and provide information to establish a secure connection, and transmit positioning messages between the UE and LMF through this secure connection.

For sensing, the similarity with positioning lies in that the signaling interaction between UE and SF can still refer to the design of positioning, including sensing capability information, sensing assistance information, sensing information request, and reporting, etc. Most of its messages still have the characteristic of small data volume of control plane signaling.

However, in some sensing scenarios, sensing measurement results may have a larger data volume compared to positioning measurement results. As described in the related art, there are different levels of sensing information. The lower the level of sensing information, the less it is processed by the UE, and the larger its data volume becomes. Therefore, sensing information reporting messages also exhibit the characteristics of user plane data transmission. The existing control plane is designed for the transmission of control signaling with small data volume, and transmitting large data volume signaling through the control plane may cause congestion in control plane signaling transmission. Hence, there is also a demand for transmitting sensing signaling through the user plane.

However, the existing technology only supports the establishment of a UP connection between the UE and LMF triggered by the network or based on UE triggering; as well as the modification or interruption process of the UP connection triggered by the LMF. In one positioning process, dynamic switching between UP and CP cannot be achieved, and it also does not support LPP to maintain both UP and CP transmission simultaneously, nor does it support the use of UP signaling as part of the CP positioning session.

Due to the dual characteristics of sensing signaling as control plane signaling and user plane data, for sensing information reporting messages, network devices may not be able to accurately determine the data volume of each sensing information report before the terminal device generates sensing data. Therefore, a more flexible conversion scheme between the user plane (UP) and control plane (CP) needs to be designed for the transmission of sensing information.

Please refer to FIG. 13, which illustrates a flowchart of a method for transmitting information according to an embodiment of the present disclosure. The method is performed by a first device. The method may include the following process 1310.

In process 1310, the first device transmits, based on configuration information, sensing signaling using a user plane protocol stack. The configuration information is used to configure a first condition, wherein the first condition is a condition for the first device to transmit sensing signaling using the user plane protocol stack. The sensing signaling is used to transmit sensing data.

In some embodiments, the first device can be either a terminal device or a network device.

In some embodiments, the first device transmits, based on the configuration information, sensing signaling to the second device using a user plane protocol stack. Correspondingly, the second device receives the sensing signaling transmitted using the user plane protocol stack.

In some embodiments, the second device can be either a terminal device or a network device.

In some embodiments, the first device and the second device are different devices. In some embodiments, different devices may refer to two devices of different types. For example, the first device may be a terminal device and the second device may be a network device; or the first device may be a network device and the second device may be a terminal device. In some embodiments, different devices may refer to two devices of the same type, such as the first device being terminal device 1 and the second device being terminal device 2; or the first device being network device 1 and the second device being network device 2. Among them, terminal device 1 and terminal device 2 are two different devices, and network device 1 and network device 2 are two different devices.

In some embodiments, the configuration information includes at least one of: first indication information, user plane protocol stack configuration information, a first condition, a duration of a first timer; wherein the first indication information is used to indicate the type of sensing signaling that the first device is allowed to transmit using the user plane protocol stack.

In some embodiments, the first indication information includes at least one of: a sensing capability report, a request for sensing assistance data, a sensing information report. Illustratively, the first indication information indicates the sensing capability report, i.e., allowing the first device to transmit the sensing capability report using the user plane protocol stack. Illustratively, the first indication information indicates both the sensing capability report and the request for sensing assistance data, i.e., allowing the first device to transmit both the sensing capability report and the request for sensing assistance data using the user plane protocol stack.

In some embodiments, the first indication information may indicate any one or more types of sensing signaling generated during the sensing process, and the embodiments of the present disclosure merely provide exemplary examples thereof.

In some embodiments, the user plane protocol stack configuration information includes at least one of: a QoS rule, a mapping relationship between a QoS flow and a resource block (RB), target address for SF, a target port number.

Services in Internet Protocol (IP) networks can be categorized into real-time services and non-real-time services. Real-time services often occupy fixed bandwidth, are sensitive to changes in network quality, and demand high stability of network quality, such as voice services. Non-real-time services occupy unpredictable bandwidth and often generate sudden traffic. Sudden traffic can lead to a decline in network quality, cause network congestion, increase forwarding delay, and in severe cases, result in packet loss, leading to a decline in service quality or even unavailability.

The best solution to address network congestion is to increase the network bandwidth, but considering the operational and maintenance costs, this is unrealistic. The most effective solution is to apply a "guaranteed" strategy to manage network traffic. With limited bandwidth resources, QoS allocates bandwidth to various services, providing end-to-end quality of service guarantees for the services. For example, voice, video, and important data applications can be prioritized for service through configuring QoS in network devices.

The target address of SF refers to the target address of the device configured as SF.

The target port number is used to identify the process that will receive the data, such as the process that will receive the sensing data carried in the sensing signaling.

In some embodiments, the first condition includes at least one of: the type of sensing signaling belongs to the type of sensing signaling that the first device is allowed to transmit using the user plane protocol stack; the data volume of the sensing signaling is greater than or equal to a first threshold value; the QoS level of the sensing signaling matches QoS level condition information; the reliability requirement of the sensing signaling matches reliability level condition information.

In some embodiments, the first timer is a prohibition timer, and during the operation of the first timer, the first device does not transmit a request message, which is used to request that the sensing signaling be transmitted using the user plane protocol stack.

In some embodiments, before process 1310, the method further includes: the first device receiving the configuration information. In some embodiments, the configuration information may be transmitted to the first device by the second device, or by other devices, which is not limited in the present disclosure. Illustratively, the first device is a terminal device, and the second device is a terminal device different from the first device. The configuration information may be transmitted to the first device by a network device that has a communication connection with the first device. In some embodiments, the second device transmits the configuration information.

In some embodiments, as illustrated in FIG. 14, the method further includes at least one of the following processes 1320 to 1330.

In process 1320, the first device receives a capability request message, wherein the capability request message is used to request the first device to report the user plane protocol stack configuration of the sensing signaling.

Correspondingly, the second device transmits the capability request message.

In process 1330, the first device transmits capability information, wherein the capability information is related to the user plane protocol stack configuration of the sensing signaling.

Correspondingly, the second device receives the capability information.

In some embodiments, the capability information can be autonomously reported by the first device, or triggered by the capability request message transmitted by the second device. This disclosure does not impose any limitations on this.

In some embodiments, the capability information includes at least one of the following:
whether the first device supports transmitting the sensing signaling using the user plane protocol stack;
whether the first device simultaneously supports transmitting the sensing signaling using the user plane protocol stack and a control plane protocol stack;
whether the first device supports dynamically selecting the user plane protocol stack for transmitting the sensing signaling based on the first condition.

In some embodiments, the second device transmits the configuration information to the first device based on the capability information. For example, in the case where the capability information indicates that the first device does not support transmitting the sensing signaling using the user plane protocol stack, the configuration information does not configure the type of sensing signaling that the first device is allowed to transmit using the user plane protocol stack, meaning that no matter what type of sensing signaling the first device intends to transmit, it is not allowed to use the user plane protocol stack for transmission. For example, in the case where the capability information indicates that the first device supports dynamic selecting the user plane protocol stack for transmitting the sensing signaling based on the first condition, the configuration information may include the first condition. For example, in the case where the capability information indicates that the first device simultaneously supports transmitting the sensing signaling using the user plane protocol stack and the control plane protocol stack, the configuration information may indicate the type of sensing signaling that is allowed to be transmitted using the user plane protocol stack and the type of sensing signaling that is allowed to be transmitted using the control plane protocol stack.

The technical solution according to the embodiments of the present disclosure involves the first device determining to use the user plane protocol stack to transmit the sensing signaling based on the configuration information. This avoids congestion in the control plane protocol stack transmission caused by an excessive amount of data carried in the sensing signaling, thereby improving data transmission efficiency and enhancing the stability of the communication system.

The present disclosure also provides exemplary embodiments for how the first device utilizes the user plane protocol stack to transmit the sensing signaling based on the configuration information.

### Method 1: Based on the first indication information and/or user plane protocol stack configuration information, the user plane protocol stack is used to transmit the sensing signaling

### 1.1 The first device decides whether to use the user plane protocol stack to transmit sensing signaling based on the configuration information

In some embodiments, based on the first indication information and/or the user plane protocol stack configuration information included in the configuration information, the aforementioned process 1310 can be implemented as any one of the following processes 1311 to 1313.

In process 1311, in the case where the configuration information includes the user plane protocol stack configuration information, the first device transmits the sensing signaling using the user plane protocol stack.

In some embodiments, in the case where the second device is configured with the user plane protocol stack configuration information, the first device transmits the sensing signaling using the user plane protocol stack.

In process 1312, in the case where the configuration information includes the user plane protocol stack configuration information, and the sensing signaling belongs to the type of sensing signaling that the first device is allowed to transmit using the user plane protocol stack, the first device transmits the sensing signaling using the user plane protocol stack.

In some embodiments, in the case where the configuration information includes the user plane protocol stack configuration information and first indication information, if the type of sensing signaling to be transmitted by the first device is the type of sensing signaling indicated in the first indication information, that is, if the type of sensing signaling to be transmitted by the first device belongs to the type of sensing signaling that the first device is allowed to transmit using the user plane protocol stack, the first device transmits the sensing signaling using the user plane protocol stack.

In process 1313, in the case where the configuration information does not include the user plane protocol stack configuration information, and/or the sensing signaling does not belong to the type of sensing signaling that the first device is allowed to transmit using the user plane protocol stack, the first device transmits the sensing signaling using the control plane protocol stack.

In some embodiments, in the case where the configuration information does not include the user plane protocol stack configuration information, the first device transmits the sensing signaling using the control plane protocol stack. In some embodiments, in the case where the second device is not configured with the user plane protocol stack configuration information, the first device transmits the sensing signaling using the control plane protocol stack.

In some embodiments, in the case where the sensing signaling does not belong to the type of sensing signaling that the first device is allowed to transmit using the user plane protocol stack, the first device transmits the sensing signaling using the control plane protocol stack. In some embodiments, in the case where the configuration information includes the first indication information, if the type of sensing signaling to be transmitted by the first device is not the type indicated in the first indication information, that is, if the type of sensing signaling to be transmitted by the first device does not belong to the type of sensing signaling that the first device is allowed to transmit using the user plane protocol stack, the first device transmits the sensing signaling using the control plane protocol stack.

In some embodiments, as illustrated in FIG. 14, the method further includes process 1340.

In process 1340, the first device transmits fourth indication information, wherein the fourth indication information is used to indicate that the first device transmits the sensing signaling using the user plane protocol stack.

Correspondingly, the second device receives the fourth indication information.

In some embodiments, the fourth indication information includes at least one of: a session identifier, a transaction identifier, a sequence number, a type of sensing signaling.

In some embodiments, the session identifier is used to identify messages belonging to the same session. Illustratively, the session ID (Session IDentity) is employed as the session identifier. The sensing session is utilized between the SF and the sensing node to acquire the sensing information. A single session is used to support a single sensing request (e.g., for a single MT-SR, MO-SR, or NI-SR). A plurality of sessions can be employed between the same endpoints (SF and sensing nodes) to support a plurality of distinct sensing requests. In such cases, the session identifier can be used to identify messages belonging to the same session, thereby avoiding interference with other sensing requests.

In some embodiments, the transaction identifier is used to identify messages belonging to the same transaction. Illustratively, a transaction ID (Transaction IDentity) is employed as the transaction identifier. Each sensing session includes one or more sensing transactions, each of which performs a single operation (capability exchange, assistance data transmission, or sensing information transmission, etc.). Transactions within one session can occur sequentially or in parallel. Transactions are represented by transaction identifiers to correlate messages with each other (e.g., requests and responses). Messages within the same transaction can share the same transaction identifier.

In some embodiments, the sequence number is used to detect duplicate sensing signaling at the receiver. Illustratively, in the case where the receiver receives two messages with the same sequence number, it indicates that these two messages are duplicate sensing signaling. The sequence number can assist the receiver device in checking the received messages for duplicates, avoiding duplicate reception and decoding.

In some embodiments, the type of sensing signaling includes at least one of: sensing capability report, request for sensing assistance data, sensing information report.

In some embodiments, the fourth indication information is transmitted using the control plane protocol stack. In some embodiments, the second device assumes that the first device transmits the sensing signaling using the control plane protocol stack. If the first device transmits the sensing signaling using the user plane protocol stack, the fourth indication information is transmitted to the second device over the control plane protocol stack, indicating that the first device transmits the sensing signaling using the user plane protocol stack, so that the second device can receive the sensing signaling over the user plane protocol stack. This avoids the second device receiving the sensing signaling over the control plane protocol stack, which can cause data transmission failure.

Through the aforementioned method, the first device can determine whether the sensing signaling to be transmitted can be transmitted using the user plane protocol stack based on the user plane protocol stack configuration and the type of sensing signaling allowed to be transmitted using the user plane protocol stack that are configured by the configuration information, so that the second device can know whether to receive the sensing signaling transmitted by the first device using the user plane protocol stack or the control plane protocol stack.

### 1.2 The first device decides whether to transmit the request message based on the configuration information

In some embodiments, based on the aforementioned method, the sensing signaling to be transmitted by the first device needs to be transmitted using the control plane protocol stack. However, the large amount of data it carries may cause congestion in the control plane protocol stack. Therefore, the first device can also transmit the request message to the second device, requesting to use the user plane protocol stack to transmit the sensing signaling.

In some embodiments, the aforementioned process 1310 can be implemented as at least one of the following processes 1314 to 1316.

In process 1314, in the case where the configuration information does not include the user plane protocol stack configuration information, or in the case where the sensing signaling does not belong to the type of sensing signaling that the first device is allowed to transmit using the user plane protocol stack, the request message is transmitted, wherein the request message is used to request that the sensing signaling be transmitted using the user plane protocol stack.

Correspondingly, the second device receives the request message.

In some embodiments, the request message can be used to request the transmission of all sensing signaling using the user plane protocol stack, or to request the transmission of part of sensing information using the user plane protocol stack.

In some embodiments, in the case where the request message is used to request the transmission of part of the sensing signaling using the user plane protocol stack, the request message may carry the identifier information of the sensing signaling to indicate the sensing signaling that is requested to be transmitted using the user plane protocol stack.

In some embodiments, the request message includes at least one of: a session identifier, a transaction identifier, a sequence number, a type of sensing signaling.

In some embodiments, in the case where the first device fails to receive the configuration information, it can also transmit the request message.

In process 1315, the first device receives second indication information, wherein the second indication information is used to instruct the first device to transmit the sensing signaling using the user plane protocol stack.

Correspondingly, the second device transmits the second indication information.

In some embodiments, in the case where the configuration information does not indicate the user plane protocol stack configuration information, the second indication information may include the user plane protocol stack configuration information. Upon receiving the second indication information, the first device transmits, based on the user plane protocol stack configuration information, the sensing signaling using the user plane protocol stack.

In some embodiments, in the case where the first device fails to receive the configuration information, the first indication information may include the user plane protocol stack configuration information and/or the first indication information. Upon receiving the second indication information, the first device transmits, based on the user plane protocol stack configuration information and/or the first indication information, the sensing signaling using the user plane protocol stack.

In some embodiments, the second indication information can be used to indicate the sensing signaling that the first device is allowed to transmit using the user plane protocol stack. Illustratively, the second indication information can include identifier information of the sensing signaling that the first device is allowed to transmit using the user plane protocol stack. In the case where the second indication information indicates the sensing signaling, the first device transmits the sensing signaling using the user plane protocol stack; in the case where the second indication information does not indicate the sensing signaling, the first device transmits the sensing signaling using the control plane protocol stack.

In some embodiments, in the case where the second indication information does not carry identifier information of any sensing signaling, it is considered that all sensing signaling can be transmitted using the user plane protocol stack.

In process 1316, the first device receives third indication information, wherein the third indication information is used to indicate that the first device is rejected from transmitting the sensing signaling using the user plane protocol stack.

Correspondingly, the second device transmits the third indication information.

In some embodiments, the third indication information can be used to indicate that the first device is not allowed to transmit the sensing signaling using the user plane protocol stack. Illustratively, the second indication information can include identifier information of the sensing signaling that the first device is not allowed to transmit using the user plane protocol stack. In the case where the second indication information indicates the sensing signaling, the first device transmits the sensing signaling using the control plane protocol stack. In the case where the second indication information does not indicate the sensing signaling, the first device transmits the sensing signaling using the user plane protocol stack.

In some embodiments, in the case where the third indication information does not carry identifier information of any sensing signaling, it is considered that all sensing signaling cannot be transmitted using the user plane protocol stack.

In some embodiments, in the case where the third indication information is only used to indicate that part of the sensing signaling is not allowed to be transmitted using the user plane protocol stack, the third indication information may also include the user plane protocol stack configuration information.

In some embodiments, the third indication information is used to configure the first timer. In some embodiments, the third indication information is used to configure the duration of the first timer.

In some embodiments, in the case where the duration of the first timer is configured in the configuration information and/or the third indication information, the method further includes at least one of the following:
upon receiving the third indication information, or transmitting the request message, the first device starts the first timer;
during the first timer period, the first device does not transmit the request message;
upon receiving the configuration information, the first device stops the first timer;
after the first timer times out, the first device transmits the request message.

In some embodiments, the start timing of the first timer can also be configured in the configuration information. Illustratively, the start timing of the first timer configured in the configuration information can be started upon receiving the third indication information, or started upon transmitting the request message.

In some embodiments, in the case where the configuration information does not include a configuration related to the first timer, the first device starts the first timer upon receiving the third indication information.

In some embodiments, the first device does not transmit request messages during the first timer period, avoiding the waste of transmission resources caused by the frequent transmitting of request messages by the first device.

In some embodiments, upon receiving the third indication information, the first device transmits the sensing signaling using the control plane protocol stack.

In some embodiments, after the first device continuously receives the third indication information N times, the first device transmits the sensing signaling using the control plane protocol stack, where N is a positive integer. Illustratively, N is 3, if the first device receives the third indication information each time after transmitting request messages three consecutive times, the first device transmits the sensing signaling using the control plane protocol stack; if the first device receives the second indication information after transmitting the request message for the third time, the first device can transmit the sensing signaling using the user plane protocol stack based on the second indication information.

Through the aforementioned method, the first device can make a request to the second device that the sensing signaling be transmitted using the user plane protocol stack, so that the configuration information does not include the user plane protocol stack configuration information, and/or, in the case where the sensing signaling does not belong to the type of sensing signaling that the first device is allowed to transmit using the user plane protocol stack, the first device can also transmit the sensing signaling using the user plane protocol stack to avoid congestion in the control plane protocol stack.

In addition, after the first device transmits the request message, there may be a situation where neither the second indication information nor the third indication information is received. For this, the embodiments of the present disclosure also provide an exemplary solution.

In some embodiments, in the case where the first device receives neither the second indication information nor the third indication information, the control plane protocol stack is used to transmit the sensing signaling.

In some embodiments, in the case where the first device receives neither the second indication information nor the third indication information, the first device will retransmit the request message after a first time interval. In some embodiments, in the case where the first device fails to receive the second indication information and/or the third indication information for M consecutive times, the first device will transmit the sensing signaling using the control plane protocol stack, where M is a positive integer.

In some embodiments, the first time interval can be predefined or preconfigured, indicated by the second device, or determined by the first device's own implementation, which is not limited in the present disclosure. In some embodiments, the value of M can be predefined or preconfigured, indicated by the second device, or determined by the first device's own implementation, which is not limited in the present disclosure.

Through the aforementioned method, the first device can determine how to transmit the sensing signaling even without receiving either the second or the third indication information, thereby preventing the terminal device from continuously transmitting the request messages, which could cause delays in the transmission of the sensing signaling, and enhancing the stability of the communication system.

### Method 2: Based on the first condition, the user plane protocol stack is used to transmit the sensing signaling

### 2.1 Based on the first condition, it is decided whether to use the user plane protocol stack to transmit the sensing signaling

In some embodiments, in the case where the configuration information includes the first condition, the above process 1310 can be implemented as any one of the following processes 1317-1318.

In process 1317, in the case where the sensing signaling satisfies the first condition, the first device transmits the sensing signaling using the user plane protocol stack.

In process 1318, in the case where the sensing signaling does not satisfy the first condition, the first device transmits the sensing signaling using the control plane protocol stack.

In some embodiments, the first condition includes at least one of the following:
the type of sensing signaling belongs to the type of sensing signaling that the first device is allowed to transmit using the user plane protocol stack;
the data volume of sensing signaling is greater than or equal to the first threshold value;
the QoS level of sensing signaling matches the QoS level condition information;
the reliability requirement of sensing signaling matches the reliability level condition information.

In some embodiments, the first threshold value can be predefined or preconfigured, indicated by the second device, or determined by the first device based on its own implementation. This disclosure does not impose any limitations on this.

In some embodiments, the QoS level condition information may include a QoS threshold. Illustratively, in the case where the QoS level of the sensing signaling reaches the QoS threshold, it is considered that the sensing signaling satisfies the first condition, and the user plane protocol stack is used to transmit the sensing signaling.

In some embodiments, the reliability level condition information may include a reliability threshold. For example, in the case where the reliability requirement of the sensing signaling meets the reliability threshold, it is considered that the sensing signaling satisfies the first condition, and the user plane protocol stack is used to transmit the sensing signaling.

In some embodiments, the first condition may include one or more of the above-mentioned contents.

In some embodiments, the first condition may also include other contents, such as the priority of sensing signaling reaching a priority threshold. In the embodiments of the present disclosure, the first condition is merely exemplified, and it may also include other contents.

In some embodiments, in the case where the first device employs the user plane protocol stack to transmit the sensing signaling, the first device may transmit the fourth indication information.

Through the aforementioned method, the first device autonomously determines whether to transmit the sensing signaling using the user plane protocol stack or the control plane protocol stack based on the first condition. This implementation allows for dynamic switching between transmitting the sensing signaling using the user plane protocol stack and the control plane protocol stack, while reducing information interaction between the first device and the second device and conserving transmission resources.

### 2.2 Based on the first condition, it is decided whether to transmit the request message

In some embodiments, in the case where the first condition is satisfied, the first device transmits the sensing signaling using the user plane protocol stack.

In some embodiments, in the case where the sensing signaling does not satisfy the first condition, the request message is transmitted, wherein the request message is used to request that the sensing signaling be transmitted using the user plane protocol stack.

In some embodiments, in the case where the sensing signaling does not satisfy the first condition and the third indication information is received, the first device transmits the sensing signaling using the control plane protocol stack.

In some embodiments, in the case where the sensing signaling does not satisfy the first condition but the second indication information is received, the first device transmits the sensing signaling using the user plane protocol stack.

Through the aforementioned method, the first device can achieve dynamic switching between transmitting sensing signaling using the user plane protocol stack and transmitting sensing signaling using the control plane protocol stack, based on the first condition and information interaction with the second device, thereby avoiding congestion in the control plane protocol stack.

It should be noted that the above-mentioned Method 1 and Method 2 are merely illustrative examples of possible methods. The methods according to the embodiments of the present disclosure can also be combined to acquire other methods, and the combined methods should also fall within the scope of protection of the embodiments of the present disclosure.

In the method embodiments described above, the technical solution of the present disclosure is introduced and explained solely from the perspective of interaction between the first device and the second device. The processes performed by the first device mentioned above can be independently implemented as a method for transmitting information on the first device, and the processes performed by the second device mentioned above can be independently implemented as a method for transmitting information on the second device. Furthermore, the embodiments according to this document can be arbitrarily combined to form new embodiments, all of which fall within the scope of protection of the present disclosure.

The following are apparatus embodiments of the present disclosure, which can be used to perform the method embodiments of the present disclosure. For details not disclosed in the apparatus embodiments of the present disclosure, please refer to the method embodiments of the present disclosure.

Please refer to FIG. 15, which illustrates a block diagram of an apparatus for transmitting information according to an embodiment of the present disclosure. The apparatus possesses the functionality to implement the aforementioned example of the method for transmitting information. This functionality can be realized either through hardware or by executing corresponding software on hardware. The apparatus can be the first device introduced above, or it can be integrated within the first device. As illustrated in FIG. 15, the apparatus 1500 may include: a transmitting module 1510.

The transmitting module 1510 is configured to transmit, based on configuration information, sensing signaling using a user plane protocol stack. The configuration information is used to configure a first condition, which is the condition for the first device to transmit the sensing signaling using the user plane protocol stack. The sensing signaling is used to transmit sensing data.

In some embodiments, the transmitting module 1510 is further configured to transmit capability information, which is related to the user plane protocol stack configuration of the sensing signaling.

In some embodiments, the capability information includes at least one of the following:
whether the first device supports transmitting the sensing signaling using the user plane protocol stack;
whether the first device simultaneously supports transmitting the sensing signaling using the user plane protocol stack and the control plane protocol stack;
whether the first device supports dynamically selecting the user plane protocol stack for transmitting the sensing signaling based on the first condition.

In some embodiments, the apparatus 1500 further includes a receiving module configured to receive a capability request message, wherein the capability request message is used to request the first device to report the user plane protocol stack configuration of the sensing signaling.

In some embodiments, the configuration information includes at least one of: first indication information, user plane protocol stack configuration information, the first condition, the duration of a first timer; wherein the first indication information is used to indicate the type of sensing signaling that the first device is allowed to transmit using the user plane protocol stack.

In some embodiments, the first indication information includes at least one of: a sensing capability report, a request for sensing assistance data, a sensing information report.

In some embodiments, the user plane protocol stack configuration information includes at least one of: a quality of service (QoS) rule, a mapping relationship between a QoS flow and a resource unit (RB), a target address of a sensing function network element (SF), a target port numbers.

In some embodiments, the first condition includes at least one of the following:
the type of sensing signaling belongs to the type of sensing signaling that the first device is allowed to transmit using the user plane protocol stack;
the data volume of the sensing signaling is greater than or equal to the first threshold value;
the QoS level of the sensing signaling matches the QoS level condition information;
the reliability requirement of the sensing signaling matches the reliability level condition information.

In some embodiments, the transmitting module 1510 is configured to transmit the sensing signaling using the user plane protocol stack in the case where the configuration information includes the user plane protocol stack configuration information.

In some embodiments, the transmitting module 1510 is configured to transmit the sensing signaling using the user plane protocol stack in the case where the configuration information includes the user plane protocol stack configuration information and the sensing signaling belongs to the type of sensing signaling that the first device is allowed to transmit using the user plane protocol stack.

In some embodiments, the transmitting module 1510 is further configured to transmit a request message in the case where the configuration information does not include the user plane protocol stack configuration information, or in the case where the sensing signaling does not belong to the type of sensing signaling that the first device is allowed to transmit using the user plane protocol stack. The request message is used to request that the sensing signaling be transmitted using the user plane protocol stack.

In some embodiments, the request message includes at least one of: a session identifier, a transaction identifier, a sequence number, a type of sensing signaling.

In some embodiments, the apparatus 1500 further includes: a receiving module, configured to receive second indication information, wherein the second indication information is used to indicate that the first device transmits the sensing signaling using the user plane protocol stack;
or
a receiving module, configured to receive third indication information, wherein the third indication information is used to indicate that the first device is rejected from transmitting the sensing signaling using the user plane protocol stack.

In some embodiments, the third indication information is used to configure the duration of the first timer.

In some embodiments, the device further includes: a processing module;
wherein the processing module is configured to start the first timer when receiving the third indication information or transmitting the request message; and/or,
the transmitting module is configured to not transmit the request message during the first timer period; and/or,
the processing module is configured to stop the first timer upon receiving the configuration information; and/or,
the transmitting module is configured to transmit the request message after the first timer times out.

In some embodiments, in the case where the configuration information includes the first condition, the transmitting module 1510 is configured to transmit the sensing signaling using the user plane protocol stack in the case where the sensing signaling satisfies the first condition;
or
the transmitting module 1510 is configured to transmit the sensing signaling using a control plane protocol stack in the case where the sensing signaling does not satisfy the first condition.

In some embodiments, the transmitting module 1510 is further configured to transmit fourth indication information, which is used to indicate that the first device transmits the sensing signaling using the user plane protocol stack.

In some embodiments, the fourth indication information includes at least one of: a session identifier, a transaction identifier, a sequence number, a type of sensing signaling.

In some embodiments, the fourth indication information is transmitted using the control plane protocol stack.

The technical solution according to the embodiments of the present disclosure involves the first device determining to use the user plane protocol stack to transmit the sensing signaling based on configuration information. This avoids congestion in the control plane protocol stack transmission caused by the excessive data volume carried in the sensing signaling, thereby improving data transmission efficiency and enhancing the stability of the communication system.

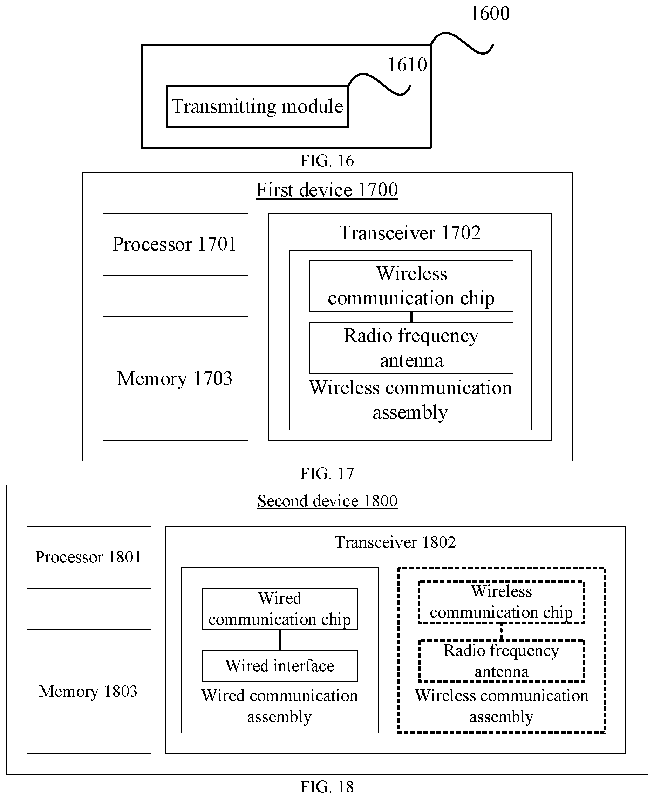

Please refer to FIG. 16, which illustrates a block diagram of an apparatus for transmitting information according to an embodiment of the present disclosure. The apparatus possesses the functionality to implement the aforementioned example of the method for transmitting information. This functionality can be realized either through hardware or by executing corresponding software on hardware. The apparatus can be the second device introduced above, or it can be integrated within the second device. As illustrated in FIG. 16, the apparatus 1600 may include: a transmitting module 1610.

The transmitting module 1610 is configured to transmit configuration information, wherein the configuration information is used to configure a first condition, wherein the first condition is a condition for a first device to transmit sensing signaling using a user plane protocol stack, wherein the sensing signaling is used to transmit sensing data.

In some embodiments, the apparatus 1600 further includes a receiving module configured to receive capability information, wherein the capability information is related to a user plane protocol stack configuration of the sensing signaling.

In some embodiments, the capability information includes at least one of the following:
whether the first device supports transmitting the sensing signaling using the user plane protocol stack;
whether the first device simultaneously supports transmitting the sensing signaling using the user plane protocol stack and the control plane protocol stack;
whether the first device supports dynamically selecting the user plane protocol stack to transmit the sensing signaling based on the first condition.

In some embodiments, the transmitting module 1610 is further configured to transmit a capability request message, which is used to request the first device to report the user plane protocol stack configuration of the sensing signaling.

In some embodiments, the configuration information includes at least one of: first indication information, user plane protocol stack configuration information, the first condition, the duration of a first timer; wherein the first indication information is used to indicate the type of sensing signaling that the first device is allowed to transmit using the user plane protocol stack.

In some embodiments, the first indication information includes at least one of: a sensing capability report, a request for sensing assistance data, a sensing information report.

In some embodiments, the user plane protocol stack configuration information includes at least one of: a quality of service (QoS) rule, a mapping relationship between a QoS flow and a resource block (RB), a target address of sensing function network element (SF), a target port number.

In some embodiments, the first condition includes at least one of the following:
the type of sensing signaling belongs to the type of sensing signaling that the first device is allowed to transmit using the user plane protocol stack;
the data volume of the sensing signaling is greater than or equal to the first threshold value;
the QoS level of the sensing signaling matches the QoS level condition information;
the reliability requirement of the sensing signaling matches the reliability level condition information.

In some embodiments, the apparatus 1600 further includes a receiving module configured to receive the sensing signaling transmitted using the user plane protocol stack in the case where the configuration information includes the user plane protocol stack configuration information.

In some embodiments, the apparatus 1600 further includes a receiving module configured to receive the sensing signaling transmitted using the user plane protocol stack in the case where the configuration information includes the user plane protocol stack configuration information and the sensing signaling belongs to the type of sensing signaling that the first device is allowed to transmit using the user plane protocol stack.

In some embodiments, the apparatus 1600 further includes a receiving module configured to receive a request message in the case where the configuration information does not include the user plane protocol stack configuration information, or in the case where the sensing signaling does not belong to the type of sensing signaling that the first device is allowed to transmit using the user plane protocol stack, wherein the request message is used to request that the sensing signaling be transmitted using the user plane protocol stack.

In some embodiments, the request message includes at least one of: a session identifier, a transaction identifier, a sequence number, a type of sensing signaling.

In some embodiments, the transmitting module 1610 is configured to transmit second indication information, which is used to instruct the first device to transmit the sensing signaling using the user plane protocol stack;
or
the transmitting module 1610 is configured to transmit third indication information, which is used to indicate that the first device is rejected from transmitting the sensing signaling using the user plane protocol stack.

In some embodiments, the third indication information is used to configure the duration of the first timer.

In some embodiments, in the case where the configuration information includes the first condition, the apparatus 1600 further includes:
the receiving module is further configured to receive the sensing signaling transmitted using the user plane protocol stack in the case where the sensing signaling satisfies the first condition;
   or
the receiving module is further configured to receive the sensing signaling transmitted using a control plane protocol stack in the case where the sensing signaling does not satisfy the first condition.

In some embodiments, the apparatus 1600 further includes a receiving module, which is further configured to receive fourth indication information, wherein the fourth indication information is used to indicate that the first device transmits the sensing signaling using the user plane protocol stack.

In some embodiments, the fourth indication information includes at least one of: a session identifier, a transaction identifier, a sequence number, a type of sensing signaling.

In some embodiments, the fourth indication information is transmitted using the control plane protocol stack.

The technical solution according to the embodiments of the present disclosure involves the second device transmitting the configuration information to the first device, enabling the first device to determine the use of a user plane protocol stack for transmitting sensing signaling based on the configuration information. This avoids congestion in the control plane protocol stack transmission caused by an excessive amount of data carried in the sensing signaling, thereby improving data transmission efficiency and enhancing the stability of the communication system.

It should be noted that in the implementation of the functions of the apparatus according to the above embodiments, the description is only exemplified based on the division of the various functional modules mentioned above. In practice, the aforementioned functions can be allocated to different functional modules according to actual needs, that is, the content structure of the device can be divided into different functional modules to complete all or part of the functions described above.

Regarding the apparatus in the aforementioned embodiments, the specific ways in which each module performs operations have been described in detail in the embodiments related to the method, and will not be elaborated here.

Please refer to FIG. 17, which illustrates the structural schematic diagram of a first device according to an embodiment of the present disclosure. The first device 1700 may include: a processor 1701, a transceiver 1702, and a memory 1703. The transceiver 1702 is used to implement transmitting and/or receiving functions, such as implementing the functions of the aforementioned transmitting module 1510, and the processor 1701 can be used to implement other processing functions or control transmitting and/or receiving.

The processor 1701 includes one or more processing cores, and executes various functional applications and information processing by running software programs and modules.

The transceiver 1702 can include a receiver and a transmitter, for example, which can be implemented as a single wireless communication assembly. This wireless communication assembly can include one wireless communication chip and an RF antenna.

The memory 1703 can be connected to the processor 1701 and the transceiver 1702.

The memory 1703 can be used to store computer programs executed by the processor, and the processor 1701 is used to execute these computer programs, thereby implementing each process in the method embodiments on the first device described above.

In some embodiments, the transceiver 1702 is configured to transmit sensing signaling using a user plane protocol stack based on configuration information. The configuration information is used to configure a first condition, which is the condition for the first device to transmit the sensing signaling using the user plane protocol stack. The sensing signaling is used to transmit sensing data.

For details not specifically mentioned in this embodiment, please refer to the previous embodiments, and we will not go into details here.

Furthermore, the memory can be implemented by any type of volatile or non-volatile storage device, or a combination thereof. Volatile or non-volatile storage devices include, but are not limited to: magnetic or optical disks, an electrically erasable programmable read-only memory, an erasable programmable read-only memory, a static random access memory, a read-only memory, a magnetic memory, a flash memory, and a programmable read-only memory.

Please refer to FIG. 18, which illustrates the structural schematic diagram of the second device according to an embodiment of the present disclosure. The second device 1800 may include: a processor 1801, a transceiver 1802, and a memory 1803. The transceiver 1802 is used to implement the function of the aforementioned transmitting module 1610.

The processor 1801 includes one or more processing cores. By executing software programs and modules, the processor 1801 performs various functional applications and information processing. The processor 1801 is used to execute other processes performed by the second device in the method embodiments described above, except for the transmitting and receiving processes.

The transceiver 1802 can include a receiver and a transmitter, for example, which can be implemented as a single wireless communication assembly. This wireless communication assembly can include one wireless communication chip and an RF antenna. The transceiver 1802 is used to perform the transmitting and/or receiving processes performed by the first device in the aforementioned method embodiments.

The memory 1803 can be connected to the processor 1801 and the transceiver 1802.

The memory 1803 can be used to store computer programs executed by the processor, and the processor 1801 is used to execute these computer programs, thereby implementing each process in the method embodiments on the second device described above.

In addition, the memory may be implemented by any type of volatile or non-volatile storage device, or a combination thereof. Volatile or non-volatile storage devices include, but are not limited to: magnetic or optical disks, an electrically erasable programmable read-only memory, an erasable programmable read-only memory, a static random access memory, a read-only memory, a magnetic memory, a flash memory, and a programmable read-only memory.

In some embodiments, the transceiver 1802 is configured to transmit configuration information, wherein the configuration information is used to configure a first condition, and the first condition is a condition for a first device to transmit the sensing signaling using the user plane protocol stack, wherein the sensing signaling is used to transmit sensing data.

For details not elaborated in this embodiment, please refer to the previous embodiments, and will not be described again here.

The embodiments of the present disclosure further provide a computer-readable storage medium, in which a computer program is stored. The computer program is configured to be executed by a processor to perform the method for transmitting information on the first device described above, or to perform the method for transmitting information on the second device described above. In some embodiments, the computer-readable storage medium may include: a read-only memory (ROM), a random-access memory (RAM), a solid state drive (SSD), or an optical disk, etc. The random access memory may include a resistance random access memory (ReRAM) and a dynamic random access memory (DRAM).

The embodiments of the present disclosure further provide a chip, which includes a programmable logic circuit and/or program instructions. When the chip operates, it is used to perform the method for transmitting information on the first device mentioned above, or to perform the method for transmitting information on the second device mentioned above.

The embodiments of the present disclosure further provide a computer program product, which includes a computer program stored in a computer-readable storage medium. The processor reads and executes the computer program from the computer-readable storage medium, for performing the method for transmitting information on the first device as described above, or performing the method for transmitting information on the second device as described above.

It should be understood that the "indication" mentioned in the embodiments of this disclosure can be direct indication, indirect indication, or even indicate an association relationship. For example, A indicating B can mean that A directly indicates B, such as B being acquired through A; it can also mean that A indirectly indicates B, such as A indicating C, and B being acquired through C; it can also mean that there is an association relationship between A and B.

In the descriptions of embodiments of the present disclosure, the term "correspond" indicates a direct or indirect corresponding relationship between two items, or indicates an association relationship between two items; and also indicates relationships such as indicating and being indicated, or configuring and being configured.

In some embodiments of the present disclosure, "predefined" can be implemented by prestoring corresponding codes, tables, or other means that can be used to indicate relevant information in devices (e.g., including the first device and the second device). The specific implementation method is not limited in the present disclosure. For example, predefined can refer to what is defined in a protocol.

In some embodiments of the present disclosure, the term "protocol" refers to a standard or a protocol in the communication field, including, for example, the LTE protocol, the NR protocol, and related protocols applied in the future communication systems, which is not limited in the present disclosure.

In this document, "plurality of" refers to two or more. "And/or" describes the association relationship between associated objects, indicating that there can be three types of relationships. For example, A and/or B can represent three situations: A exists alone, A and B exist simultaneously, and B exists alone. The character "/" generally indicates that the relationship between the preceding and following associated objects is an "or" relationship.

The term "greater than or equal to" mentioned in this document can mean greater than or equal to, or simply greater than, while the term "less than or equal to" can mean less than or equal to, or simply less than.

In addition, the process numbers described in this document only exemplarily illustrate one possible execution sequence among processes. In some other embodiments, the aforementioned processes may not be performed in numerical order. For instance, two processes with different numbers may be performed simultaneously, or two processes with different numbers may be performed in a sequence opposite to the one illustrated in the diagram. The embodiments of the present disclosure do not impose any limitations on this.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for transmitting information, performed by a first device, the method comprising:
transmitting, based on configuration information, sensing signaling using a user plane protocol stack, wherein the configuration information is used to configure a first condition, wherein the first condition is a condition for the first device to transmit the sensing signaling using the user plane protocol stack, and the sensing signaling is used to transmit sensing data.

2. The method according to claim 1, further comprising:
transmitting capability information, wherein the capability information is related to a user plane protocol stack configuration of the sensing signaling.

3. The method according to claim 2, wherein the capability information comprises at least one of:
whether the first device supports transmitting the sensing signaling using the user plane protocol stack;
whether the first device simultaneously supports transmitting the sensing signaling using the user plane protocol stack and a control plane protocol stack;
whether the first device supports dynamically selecting, based on the first condition, the user plane protocol stack for transmitting the sensing signaling.

4. The method according to any one of claims 1 to 3, further comprising:
receiving a capability request message, wherein the capability request message is used to request the first device to report user plane protocol stack configuration of the sensing signaling.

5. The method according to any one of claims 1 to 4, wherein the configuration information comprises at least one of: first indication information, user plane protocol stack configuration information, the first condition, a duration of a first timer; wherein the first indication information is used to indicate a type of sensing signaling that the first device is allowed to transmit using the user plane protocol stack.

6. The method according to claim 5, wherein the first indication information comprises at least one of: a sensing capability report, a request for sensing assistance data, a sensing information report.

7. The method according to claim 5 or 6, wherein the user plane protocol stack configuration information comprises at least one of: a quality of service (QoS) rule, a mapping relationship between a QoS flow and a resource block (RB), a target address of a sensing function network element (SF), a target port number.

8. The method according to any one of claims 5 to 7, wherein the first condition comprises at least one of:
a type of the sensing signaling belongs to the type of sensing signaling that the first device is allowed to transmit using the user plane protocol stack;
data volume of the sensing signaling is greater than or equal to a first threshold;
a QoS level of the sensing signaling matches QoS level condition information;
a reliability requirement of the sensing signaling matches reliability level condition information.

9. The method according to any one of claims 5 to 8, wherein transmitting the sensing signaling using the user plane protocol stack based on the configuration information comprises:
transmitting the sensing signaling using the user plane protocol stack in a case where the configuration information comprises the user plane protocol stack configuration information.

10. The method according to any one of claims 5 to 8, wherein transmitting the sensing signaling using the user plane protocol stack based on the configuration information comprises:
transmitting the sensing signaling using the user plane protocol stack in a case where the configuration information comprises the user plane protocol stack configuration information, and the sensing signaling belongs to the type of sensing signaling that the first device is allowed to transmit using the user plane protocol stack.

11. The method according to any one of claims 5 to 8, further comprising:
transmitting a request message in a case where the configuration information does not comprise the user plane protocol stack configuration information, or the sensing signaling does not belong to the type of sensing signaling that the first device is allowed to transmit using the user plane protocol stack, wherein the request message is used to request that the sensing signaling be transmitted using the user plane protocol stack.

12. The method according to claim 11, wherein the request message comprises at least one of: a session identifier, a transaction identifier, a sequence number, a type of sensing signaling.

13. The method according to claim 11 or 12, further comprising:
receiving second indication information, wherein the second indication information is used to instruct the first device to transmit the sensing signaling using the user plane protocol stack; or
receiving third indication information, wherein the third indication information is used to indicate that the first device is rejected from transmitting the sensing signaling using the user plane protocol stack.

14. The method according to claim 13, wherein the third indication information is used to configure the duration of the first timer.

15. The method according to claim 5 or 14, further comprising at least one of:
starting the first timer when receiving third indication information or transmitting a request message;
refraining from transmitting the request message during the first timer period;
stopping the first timer when receiving the configuration information;
transmitting the request message after the first timer times out.

16. The method according to any one of claims 1 to 8, wherein in a case where the configuration information comprises the first condition, transmitting the sensing signaling using the user plane protocol stack based on the configuration information comprises:
transmitting the sensing signaling using the user plane protocol stack in a case where the sensing signaling satisfies the first condition; or
transmitting the sensing signaling using a control plane protocol stack in a case where the sensing signaling does not satisfy the first condition.

17. The method according to claim 9 or 16, further comprising:
transmitting fourth indication information, wherein the fourth indication information is used to indicate that the first device transmits the sensing signaling using the user plane protocol stack.

18. The method according to claim 17, wherein the fourth indication information comprises at least one of: a session identifier, a transaction identifier, a sequence number, a type of sensing signaling.

19. The method according to claim 17 or 18, wherein the fourth indication information is transmitted using a control plane protocol stack.

20. A method for transmitting information, performed by a second device, the method comprising:
transmitting configuration information, wherein the configuration information is used to configure a first condition, wherein the first condition is a condition for a first device to transmit sensing signaling using a user plane protocol stack, wherein the sensing signaling is used to transmit sensing data.

21. The method according to claim 20, further comprising:
receiving capability information, wherein the capability information is related to a user plane protocol stack configuration of the sensing signaling.

22. The method according to claim 21, wherein the capability information comprises at least one of:
whether the first device supports transmitting the sensing signaling using the user plane protocol stack;
whether the first device simultaneously supports transmitting the sensing signaling using the user plane protocol stack and a control plane protocol stack;
whether the first device supports dynamically selecting, based on the first condition, the user plane protocol stack for transmitting the sensing signaling.

23. The method according to any one of claims 20 to 22, further comprising:
transmitting a capability request message, wherein the capability request message is used to request the first device to report the user plane protocol stack configuration of the sensing signaling.

24. The method according to any one of claims 20 to 23, wherein the configuration information comprises at least one of: first indication information, user plane protocol stack configuration information, the first condition, a duration of a first timer; wherein the first indication information is used to indicate a type of sensing signaling that the first device is allowed to transmit using the user plane protocol stack.

25. The method according to claim 24, wherein the first indication information comprises at least one of: a sensing capability report, a request for sensing assistance data, a sensing information report.

26. The method according to claim 24 or 25, wherein the user plane protocol stack configuration information comprises at least one of: a quality of service (QoS) rule, a mapping relationship between a QoS flow and a resource block (RB), a target address of a sensing function network element (SF), a target port number.

27. The method according to any one of claims 24 to 26, wherein the first condition comprises at least one of:
a type of the sensing signaling belongs to the type of sensing signaling that the first device is allowed to transmit using the user plane protocol stack;
data volume of the sensing signaling is greater than or equal to a first threshold;
a QoS level of the sensing signaling matches QoS level condition information;
a reliability requirement of the sensing signaling matches reliability level condition information.

28. The method according to any one of claims 24 to 27, further comprising:
receiving the sensing signaling transmitted using the user plane protocol stack in a case where the configuration information comprises the user plane protocol stack configuration information.

29. The method according to any one of claims 24 to 27, further comprising:
receiving the sensing signaling transmitted using the user plane protocol stack in a case where the configuration information comprises the user plane protocol stack configuration information, and the sensing signaling belongs to the type of sensing signaling that the first device is allowed to transmit using the user plane protocol stack.

30. The method according to any one of claims 24 to 27, further comprising:
receiving a request message in a case where the configuration information does not comprise the user plane protocol stack configuration information, or the sensing signaling does not belong to the type of sensing signaling that the first device is allowed to transmit using the user plane protocol stack, wherein the request message is used to request that the sensing signaling be transmitted using the user plane protocol stack.

31. The method according to claim 30, wherein the request message comprises at least one of: a session identifier, a transaction identifier, a sequence number, a type of sensing signaling.

32. The method according to claim 29 or 30, further comprising:
transmitting second indication information, wherein the second indication information is used to instruct the first device to transmit the sensing signaling using the user plane protocol stack; or
transmitting third indication information, wherein the third indication information is used to indicate that the first device is rejected from transmitting the sensing signaling using the user plane protocol stack.

33. The method according to claim 32, wherein the third indication information is used to configure the duration of the first timer.

34. The method according to any one of claims 20 to 27, wherein in a case where the configuration information comprises the first condition, the method further comprises:
receiving the sensing signaling transmitted using the user plane protocol stack in a case where the sensing signaling satisfies the first condition; or
receiving the sensing signaling transmitted using a control plane protocol stack in a case where the sensing signaling does not satisfy the first condition.

35. The method according to claim 28 or 34, further comprising:
receiving fourth indication information, wherein the fourth indication information is used to indicate that the first device transmits the sensing signaling using the user plane protocol stack.

36. The method according to claim 35, wherein the fourth indication information comprises at least one of: a session identifier, a transaction identifier, a sequence number, a type of sensing signaling.

37. The method according to claim 35 or 36, wherein the fourth indication information is transmitted using a control plane protocol stack.

38. An apparatus for transmitting information, comprising:
a transmitting module, configured to transmit, based on configuration information, sensing signaling using a user plane protocol stack, wherein the configuration information is used to configure a first condition, wherein the first condition is a condition for a first device to transmit the sensing signaling using the user plane protocol stack, and the sensing signaling is used to transmit sensing data.

39. The apparatus according to claim 38, wherein the transmitting module is further configured to transmit capability information, wherein the capability information is related to a user plane protocol stack configuration of the sensing signaling.

40. The apparatus according to claim 39, wherein the capability information comprises at least one of:
whether the first device supports transmitting the sensing signaling using the user plane protocol stack;
whether the first device simultaneously supports transmitting the sensing signaling using the user plane protocol stack and a control plane protocol stack;
whether the first device supports dynamically selecting, based on the first condition, the user plane protocol stack for transmitting the sensing signaling.

41. The apparatus according to any one of claims 38 to 40, further comprising:
a receiving module, configured to receive a capability request message, wherein the capability request message is used to request the first device to report user plane protocol stack configuration of the sensing signaling.

42. The apparatus according to any one of claims 38 to 41, wherein the configuration information comprises at least one of: first indication information, user plane protocol stack configuration information, the first condition, a duration of a first timer; wherein the first indication information is used to indicate a type of sensing signaling that the first device is allowed to transmit using the user plane protocol stack.

43. The apparatus according to claim 42, wherein the first indication information comprises at least one of: a sensing capability report, a request for sensing assistance data, a sensing information report.

44. The apparatus according to claim 42 or 43, wherein the user plane protocol stack configuration information comprises at least one of: a quality of service (QoS) rule, a mapping relationship between a QoS flow and a resource block (RB), a target address of a sensing function network element (SF), a target port number.

45. The apparatus according to any one of claims 42 to 44, wherein the first condition comprises at least one of:
a type of the sensing signaling belongs to the type of sensing signaling that the first device is allowed to transmit using the user plane protocol stack;
data volume of the sensing signaling is greater than or equal to a first threshold value;
a QoS level of the sensing signaling matches QoS level condition information;
a reliability requirement of the sensing signaling matches reliability level condition information.

46. The apparatus according to any one of claims 42 to 45, wherein the transmitting module is configured to transmit the sensing signaling using the user plane protocol stack in a case where the configuration information comprises the user plane protocol stack configuration information.

47. The apparatus according to any one of claims 42 to 45, wherein the transmitting module is configured to transmit the sensing signaling using the user plane protocol stack in a case where the configuration information comprises the user plane protocol stack configuration information, and the sensing signaling belongs to the type of sensing signaling that the first device is allowed to transmit using the user plane protocol stack.

48. The apparatus according to any one of claims 42 to 45, wherein the transmitting module is further configured to transmit a request message in a case where the configuration information does not comprise the user plane protocol stack configuration information, or the sensing signaling does not belong to the type of sensing signaling that the first device is allowed to transmit using the user plane protocol stack, wherein the request message is used to request that the sensing signaling be transmitted using the user plane protocol stack.

49. The apparatus according to claim 48, wherein the request message comprises at least one of: a session identifier, a transaction identifier, a sequence number, a type of sensing signaling.

50. The apparatus according to claim 48 or 49, further comprising a receiving module, configured to:
receive second indication information, wherein the second indication information is used to instruct the first device to transmit the sensing signaling using the user plane protocol stack; or
receive third indication information, wherein the third indication information is used to indicate that the first device is rejected from transmitting the sensing signaling using the user plane protocol stack.

51. The apparatus according to claim 50, wherein the third indication information is used to configure the duration of the first timer.

52. The apparatus according to claim 42 or 51, further comprising a processing module;
wherein:
the processing module is configured to start the first timer when receiving the third indication information or transmitting a request message; and/or,
the transmitting module is configured to refrain from transmitting the request message during the first timer period; and/or,
the processing module is configured to stop the first timer when receiving the configuration information; and/or,
the transmitting module is configured to transmit the request message after the first timer times out.

53. The apparatus according to any one of claims 38 to 45, wherein in a case where the configuration information comprises the first condition, the transmitting module is configured to:
transmit the sensing signaling using the user plane protocol stack in a case where the sensing signaling satisfies the first condition; or
transmit the sensing signaling using a control plane protocol stack in a case where the sensing signaling does not satisfy the first condition.

54. The apparatus according to claim 46 or 53, wherein the transmitting module is further configured to transmit fourth indication information, wherein the fourth indication information is used to indicate that the first device transmits the sensing signaling using the user plane protocol stack.

55. The apparatus according to claim 54, wherein the fourth indication information comprises at least one of: a session identifier, a transaction identifier, a sequence number, a type of sensing signaling.

56. The apparatus according to claim 54 or 55, wherein the fourth indication information is transmitted using a control plane protocol stack.

57. An apparatus for transmitting information, comprising:
a transmitting module, configured to transmit configuration information, wherein the configuration information is used to configure a first condition, wherein the first condition is a condition for a first device to transmit sensing signaling using a user plane protocol stack, wherein the sensing signaling is used to transmit sensing data.

58. The apparatus according to claim 57, further comprising:
a receiving module, configured to receive capability information, wherein the capability information is related to a user plane protocol stack configuration of the sensing signaling.

59. The apparatus according to claim 58, wherein the capability information comprises at least one of:
whether the first device supports transmitting the sensing signaling using the user plane protocol stack;
whether the first device simultaneously supports transmitting the sensing signaling using the user plane protocol stack and a control plane protocol stack;
whether the first device supports dynamically selecting, based on the first condition, the user plane protocol stack for transmitting the sensing signaling.

60. The apparatus according to any one of claims 57 to 59, wherein the transmitting module is further configured to transmit a capability request message, wherein the capability request message is used to request the first device to report the user plane protocol stack configuration of the sensing signaling.

61. The apparatus according to any one of claims 57 to 60, wherein the configuration information comprises at least one of: first indication information, user plane protocol stack configuration information, the first condition, a duration of a first timer; wherein the first indication information is used to indicate a type of sensing signaling that the first device is allowed to transmit using the user plane protocol stack.

62. The apparatus according to claim 61, wherein the first indication information comprises at least one of: a sensing capability report, a request for sensing assistance data, a sensing information report.

63. The apparatus according to claim 61 or 62, wherein the user plane protocol stack configuration information comprises at least one of: a quality of service (QoS) rule, a mapping relationship between a QoS flow and a resource block (RB), a target address of a sensing function network element (SF), a target port number.

64. The apparatus according to any one of claims 61 to 63, wherein the first condition comprises at least one of:
a type of the sensing signaling belongs to the type of sensing signaling that the first device is allowed to transmit using the user plane protocol stack;
data volume of the sensing signaling is greater than or equal to a first threshold;
a QoS level of the sensing signaling matches QoS level condition information;
a reliability requirement of the sensing signaling matches reliability level condition information.

65. The apparatus according to any one of claims 61 to 64, further comprising:
a receiving module, configured to receive the sensing signaling transmitted using the user plane protocol stack in a case where the configuration information comprises the user plane protocol stack configuration information.

66. The apparatus according to any one of claims 61 to 64, further comprising:
a receiving module, configured to receive the sensing signaling transmitted using the user plane protocol stack in a case where the configuration information comprises the user plane protocol stack configuration information, and the sensing signaling belongs to the type of sensing signaling that the first device is allowed to transmit using the user plane protocol stack.

67. The apparatus according to any one of claims 61 to 64, further comprising:
a receiving module, configured to receive a request message in a case where the configuration information does not comprise the user plane protocol stack configuration information, or the sensing signaling does not belong to the type of sensing signaling that the first device is allowed to transmit using the user plane protocol stack, wherein the request message is used to request that the sensing signaling be transmitted using the user plane protocol stack.

68. The apparatus according to claim 67, wherein the request message comprises at least one of: a session identifier, a transaction identifier, a sequence number, a type of sensing signaling.

69. The apparatus according to claim 66 or 67, wherein:
the transmitting module is further configured to transmit second indication information, wherein the second indication information is used to instruct the first device to transmit the sensing signaling using the user plane protocol stack; or
the transmitting module is further configured to transmit third indication information, wherein the third indication information is used to indicate that the first device is rejected from transmitting the sensing signaling using the user plane protocol stack.

70. The apparatus according to claim 69, wherein the third indication information is used to configure the duration of the first timer.

71. The apparatus according to any one of claims 57 to 64, wherein in a case where the configuration information comprises the first condition, the apparatus further comprises: a receiving module;
wherein:
the receiving module is configured to receive the sensing signaling transmitted using the user plane protocol stack in a case where the sensing signaling satisfies the first condition; or
the receiving module is configured to receive the sensing signaling transmitted using a control plane protocol stack in a case where the sensing signaling does not satisfy the first condition.

72. The apparatus according to claim 65 or 71, wherein the receiving module is further configured to receive fourth indication information, wherein the fourth indication information is used to indicate that the first device transmits the sensing signaling using the user plane protocol stack.

73. The apparatus according to claim 72, wherein the fourth indication information comprises at least one of: a session identifier, a transaction identifier, a sequence number, or a type of sensing signaling.

74. The apparatus according to claim 72 or 73, wherein the fourth indication information is transmitted using a control plane protocol stack.

75. A communication device, wherein the communication device comprises a processor and a memory, the memory storing a computer program, and the processor executing the computer program to perform the method as defined in any one of claims 1 to 19, or to perform the method as defined in any one of claims 20 to 37.

76. A computer-readable storage medium, wherein the storage medium stores a computer program for execution by a processor to perform the method as defined in any one of claims 1 to 19, or to perform the method as defined in any one of claims 20 to 37.

77. A chip, wherein the chip comprises a programmable logic circuit and/or program instructions, which, when the chip is operated, are used to perform the method as defined in any one of claims 1 to 19, or to perform the method as defined in any one of claims 20 to 37.

78. A computer program product, wherein the computer program product comprises computer instructions stored in a computer-readable storage medium, and a processor reads and executes the computer instructions from the computer-readable storage medium to perform the method as defined in any one of claims 1 to 19, or to perform the method as defined in any one of claims 20 to 37.
